Europäisches Patentamt

European Patent Office

Office européen des brevets

(11) Veröffentlichungsnummer : **0 023 672 B1**

(12) **EUROPÄISCHE PATENTSCHRIFT**

(45) Veröffentlichungstag der Patentschrift :
08.02.84

(21) Anmeldenummer : 80104334.0

(22) Anmeldetag : 23.07.80

(51) Int. Cl.³ : **A 61 C 1/08**, A 61 C 17/02,
F 16 K 7/06

(54) Zahnärztliches Handstück mit einem Ventil zur Steuerung des Durchflusses eines strömenden Mediums.

(30) Priorität : 30.07.79 DE 2930853

(43) Veröffentlichungstag der Anmeldung :
11.02.81 Patentblatt 81/06

(45) Bekanntmachung des Hinweises auf die Patenterteilung : 08.02.84 Patentblatt 84/06

(84) Benannte Vertragsstaaten :
AT CH FR GB IT LI SE

(56) Entgegenhaltungen :
CH-A-   179 527
CH-A-   237 060
DE-C-   533 899
US-A- 1 556 181
US-A- 2 660 395
US-A- 2 814 877
US-A- 3 086 797
US-A- 3 197 173
US-A- 4 017 974

(73) Patentinhaber : SIEMENS AKTIENGESELLSCHAFT
Berlin und München Wittelsbacherplatz 2
D-8000 München 2 (DE)

(72) Erfinder : Klose, Hans-Jürgen
Gleiwitzer Strasse 44
D-6944 Hemsbach (DE)

EP 0 023 672 B1

Zahnärztliches Handstück mit einem Ventil zur Steuerung des Durchflusses eines strömenden Mediums

Die Erfindung bezieht sich auf ein zahnärztliches Handstück mit zwei voneinander trennbaren Handstückteilen, die Leitungsabschnitte einer Fluidleitung enthalten, mit einem zwischen den beiden Leitungsabschnitten auswechselbar angeordneten Ventil, welches im wesentlichen aus einem flexiblen Schlauchstück und wenigstens einem daran befestigten Rohrstück, welche im montierten Zustand die beiden Leitungsabschnitte miteinander verbinden, sowie einem durch eine Handhabe betätigbaren Klemmglied gebildet ist, das im Sinne einer Quetschung des Schlauchstückes verstellbar gehaltert ist, und mit einem im einen Handstückteil axial sich erstreckenden Hohlraum, der nach der der Trennstelle abgewandten Seite hin unter Bildung einer Anlagefläche in den einen Leitungsabschnitt übergeht und nach der anderen Seite hin offen ist für den Einsatz eines das Schlauchstück enthaltenden und mittels Dichtelemente dichtend einfügbaren und — im eingefügten Zustand — an der Anlagefläche anliegenden Teils des Ventils.

Bei einem bekannten solchen Handstück (US-A-28 14 877) ist das Ventil zwischen den beiden Handstückteilen in Form eines die Außenkontur des Handstückes fortsetzenden Zwischenstückes angeordnet. Dieses, das flexible Schlauchstück und das mit ihm zusammenwirkende Klemmglied enthaltende Zwischenstück ist mittels einer Schraubverbindung mit den beiden Handstückteilen verbunden. Das eine Ende des Zwischenstückes ist im Außendurchmesser abgestuft ; dieses abgestufte Ende greift im montierten Zustand in einen der Abstufung angepaßten Hohlraum des einen Handstückteils ein. Das Schlauchstück ist an beiden Enden durch Rohrstücke, welche die Leitungsverbindung zwischen Schlauchstück und den Leitungsabschnitten der Handstückteile herstellen, gegen « Einfallen » gesichert.

Zum Auswechseln des dem Verschleiß am stärksten unterworfenen Schlauchstückes muß das Zwischenstück von den beiden Handstückteilen getrennt, also das komplette Ventil ausgebaut werden. Danach sind die beiden Rohrstücke vom Schlauchstück abzuziehen. Beim Wiedereinsetzen eines neuen Schlauchstückes und Zusammenbau der Teile sind beide Schlauchenden wieder an die festen Rohrstücke der betreffenden Leitungsabschnitte der Handstückteile anzuschließen. Eine solche Handstückkonstruktion ist bezüglich der Auswechselbarkeit des Schlauchstückes der Ventilanordnung relativ umständlich.

Bei einem weiteren bekannten zahnärztlichen Handstück (US-A-40 17 974) ist nicht erkennbar, ob die im Innern des Handstückes angeordneten quetschbaren Schlauchstücke zugänglich sind. Möglicherweise muß — um an die Schlauchstücke heranzukommen — die gesamte Anordnung, bestehend aus den Schlauchstücken und den beidseitig daran befestigten festen Rohrstücken, aus dem Handstück herausgezogen werden. Das Auswechseln der Schlauchstücke ist hier also noch umständlicher und aufwendiger als bei dem zuvor geschilderten Handstück.

Aufgabe der vorliegenden Erfindung ist es, ein demgegenüber verbessertes zahnärztliches Handstück mit einem servicefreundlicheren Ventil anzugeben, bei dem insbesondere das Auswechseln des dem Verschleiß am stärksten unterworfenen Schlauchstückes leichter und rascher möglich ist.

Zur Erreichung dieses Ziels wird erfindungsgemäß vorgeschlagen, daß das Ventil im Innern eines der beiden Handstückteile angeordnet ist, zu welchem Zweck sich der axiale Hohlraum gänzlich innerhalb dieses Handstückteils erstreckt, und daß das Schlauchstück und das zumindest im Bereich der offenen Seite des Hohlraums am Schlauchstück angeordnete Rohrstück eine Patrone bilden, die nach Trennung der beiden Handstückteile axial in den den Abmessungen der Patrone angepaßten Hohlraum eingesetzt und zum Auswechseln aus diesem wieder herausgezogen werden kann.

Der patronenartige Aufbau und die Anordnung der Patrone in einem entsprechend ausgebildeten Hohlraum mit axialer Entnahme nur von einer Seite aus gestattet ein rasches, problemloses Austauschen der dem Verschleiß unterworfenen Teile des Ventils. Die auszutauschenden Teile, im einfachsten Falle ein Schlauchstück mit einem festen Rohr am einen Ende, sind einfach herzustellende Teile. Die stirnseitige Abdichtung des Leitungskanals der Patrone und des benachbarten Leitungsabschnittes der Fluidleitung gegenüber dem Hohlraum erfolgt vorteilhafterweise mittels eines axial vorgespannten Dichtringes. Die Vorspannung kann durch eine Spannmutter erfolgen, die vorteilhafterweise mit Mitteln für den Eingriff eines Werkzeuges zum Lösen der Spannmutter versehen ist. Als Klemmglied ist vorteilhafterweise eine Kugel verwendet, die durch eine Ausnehmung in einer den Schlauch umgebenden Hülse eingreift. Die Ausnehmung und die Handhabe, in der die Kugel geführt ist, sind vorteilhafterweise so gestaltet, daß bei axialer Entnahme der Patrone die Kugel zusammen mit der Handhabe im Gerät verbleibt.

Ein Ausführungsbeispiel der Erfindung wird nachfolgend anhand der Zeichnung näher erläutert. Es zeigen :

Figur 1 ein zahnärztliches Handstück in einer schaubildlichen Darstellung,

Figur 2 einen Längsschnitt entlang der Linie II-II in Fig. 1,

Figur 3 Einzelheiten des Ventils nach Fig. 2 in einer Explosionsdarstellung,

Figuren 4 und 5 das Ventil im Querschnitt entlang der Linie IV-IV in Fig. 2, einerseits in geschlossener und andererseits in geöffneter Stellung.

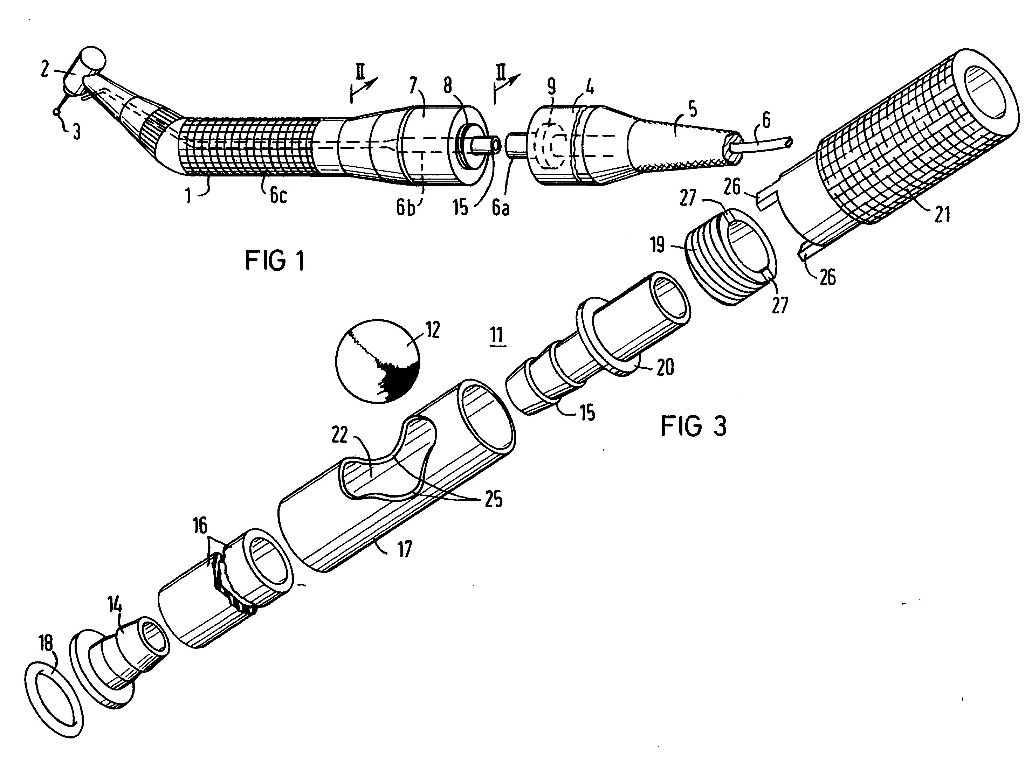

Die Fig. 1 zeigt in einer schaubildlichen Darstellung ein zahnärztliches Handstück, enthaltend einen Griffkörper 1 mit einem Kopfteil 2 zur Aufnahme eines Drehwerkzeuges 3, sowie ein im abgenommenen Zustand gezeigtes, antriebs-

seitiges Handstückteil 4. Das Handstückteil 4 kann einen nicht dargestellten Antriebsmotor enthalten, dem über eine nicht dargestellte, in einem Versorgungsschlauch 5 geführte Versorgungsleitung Antriebsenergie zugeführt wird. Der Versorgungsschlauch 5 enthält außerdem noch wenigstens eine Fluidleitung 6 zur Zuführung eines zu Kühlzwecken im Bereich des Drehwerkzeuges 3 benötigten fluiden Mediums, wie Luft und/oder Wasser. Der Einfachheit halber ist in der Zeichnung nur eine Fluidleitung eingetragen, und zwar diejenige, für deren durchströmendes Medium eine Durchflußmengensteuerung gewünscht wird. Das hierzu vorgesehene Ventil 7 ist an dem dem Kopfteil 2 abgewandten Ende des Griffstückes 1 zwischen diesem und dem antriebsseitigen Handstückteil 4 angeordnet. Die Verbindung von Ventil 7 und antriebsseitigem Handstückteil 4 erfolgt mittels einer Schraubverbindung 8, 9. Zuvor ist der im Innern des Handstückteils verlaufende Leitungsabschnitt 6a der Fluidleitung 6 mit dem sich daran anschließenden Leitungsabschnitt 6b zu verbinden.

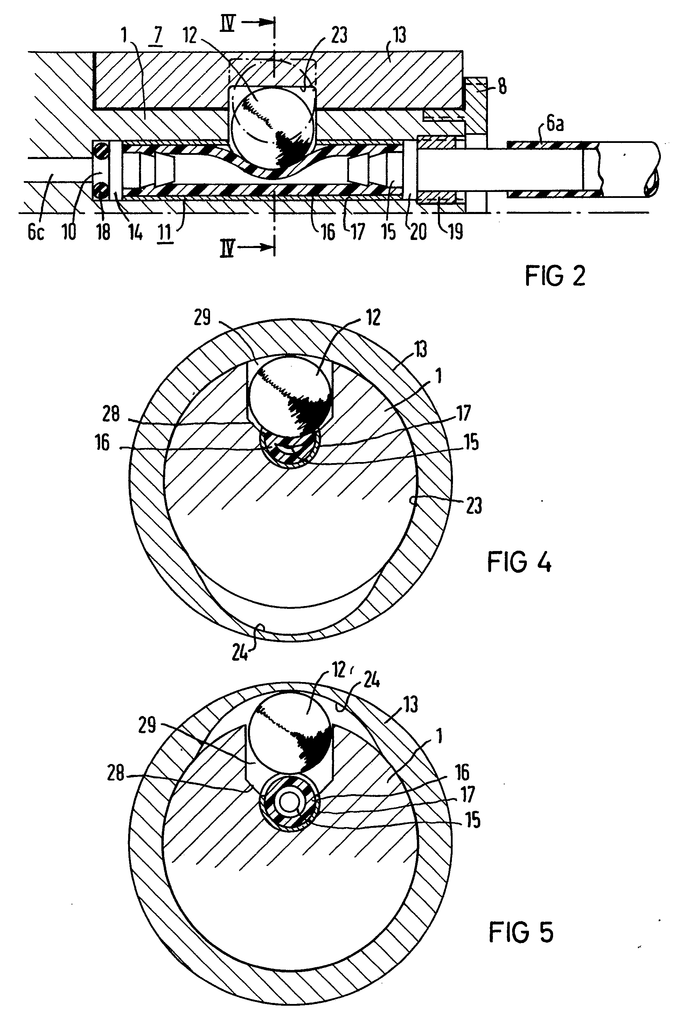

Das Ventil 7 besteht, wie anhand der Fig. 2 und 3 näher erkennbar ist, aus einer in einem axial sich erstreckenden Hohlraum 10 des Griffkörpers 1 eingelegten Patrone 11, einer Kugel 12, sowie einem konzentrisch angeordneten Betätigungsring 13.

Die Patrone 11 besteht in der einfachsten Form aus einem Schlauchstück, in der dargestellten Ausführungsform aus einem zwischen zwei festen Anschlußrohren 14, 15, eingespannten Schlauchstück 16. Diese Teile bilden zusammen den Leitungsabschnitt 6b. Der Schlauch 16 ist mittels einer Hülse 17 durch Klemmwirkung an den Anschlußnippeln der Rohre 14 und 15 befestigt. Zur Abdichtung des Leitungsabschnittes 6b und 6c gegen den Hohlraum 10 ist ein Dichtring 18 vorgesehen. Mit 19 ist eine Spannmutter bezeichnet, die an einem Flansch 20 des festen Anschlußrohres 15 anliegt und so die gesamte Patrone 11 axial gegen den Dichtring 18 drückt.

Die Fig. 3 zeigt Einzelteile der Patrone 11 sowie die Kugel 12, den Dichtring 18 und ein Werkzeug 21 zur Demontage der Patrone.

Die Hülse 17 ist mit einer Ausnehmung 22 versehen, die so gestaltet ist, daß die Kugel 12 teilweise darin eingesenkt zu liegen kommen kann. In Betrachtung der Fig. 2 und 4 ergibt sich dabei eine Quetschung des Schlauches und damit eine Reduzierung des Durchflußquerschnittes. Ein Maß für die Reduzierung des Durchflußquerschnittes ist die Eindrücktiefe der Kugel, die über die exzentrisch angeordnete Innenfläche 23 des Betätigungsringes 13 kontinuierlich eingestellt werden kann.

Um die Patrone 11 bei Bedarf leicht auswechseln zu können, enthält der Betätigungsring 13 eine Ausnehmung 24 an seinem inneren Umfang, in die die Kugel 12 ausweichen kann, wenn die Patrone 11 axial aus dem Hohlraum 10 herausgezogen wird, was nach Lösen der Spannmutter 19 erfolgen kann. Damit die Kugel 12 beim Herausziehen der Patrone leichter in die Ausnehmung 24 des Betätigungsringes gedrückt wird, weist die Hülse 17 an der Ausnehmung 22 schräge Auflaufkanten 25 auf.

Zum Loslösen der Patrone 11 enthält des Werkzeug 21 zwei achsparallele Vorsprünge 26, die in entsprechende Nuten 27 der Spannmutter 19 eingreifen. Zur Demontage des Ventils wird der Betätigungsring 13 so weit gedreht, bis die Ausnehmung 24 sich über der Kugel 12 befindet (Fig. 5). In dieser Stellung kann die gesamte Patrone 11 axial aus dem Hohlraum 10 des Handstückkörpers herausgezogen werden. Eine gegenüber dem Durchmesser der Kugel 12 vorgesehene Querschnittsverengung 28 im radialen Führungskanal 29 der Kugel verhindert ein Durchfallen der Kugel in den Hohlraum 10 bei entnommener Patrone.

Die Fig. 4 zeigt das Ventil in einer nahezu geschlossenen Stellung, in der die Kugel durch den Betätigungsring 13 radial nach innen gedrückt wird, bis sie auf den Rändern der Ausnehmung 22 der Hülse 17 anliegt. Der Schlauch ist in dieser Ventilstellung nahezu vollständig zusammengedrückt.

Aus der Fig. 5, die das Ventil an der Stelle IV-IV in Fig. 2 und zwar in der geöffneten Stellung zeigt, ist zu ersehen, daß, wenn die Kugel 12 sich in der Ausnehmung 24 des Betätigungsringes 13 befindet, die Kugel außerhalb des Umfanges der Hülse 17 zu liegen kommt. Durch entsprechendes Bemessen der Ausnehmung 22, die als Anschlag für die Kugel 12 dient, kann auch ein vollständiges Abquetschen des Schlauches und damit ein völliges Schließen des Ventils erzielt werden.

Wie eingangs in der Beschreibung bereits erwähnt, kann die Patrone in ihrer einfachsten Ausführungsform aus einem bloßen Schlauchstück bestehen. In diesem Falle ist es zweckmäßig, wenn der verwendete Schlauch zwar radial gut quetschbar, axial jedoch relative steif ist. Außerdem ist es vorteilhaft, die stirnseitige Fläche des Raumes 10 mit einer Sicke (Eindrehung) zu versehen, an der sich das blanke Schlauchstückende dichtend anlegen kann. Denkbar, und im Rahmen der Erfindung liegt es auch, nur *ein* festes Rohrstück vorzusehen, vorteilhafterweise an der Seite, an der der Anschluß mit dem Leitungsabschnitt 6a erfolgt. Auch in diesem Fall ist es zweckmäßig, an der gegenüberliegenden Stirnseite des Hohlraumes 10 eine Sicke vorzusehen, an der sich das andere, blanke Schlauchende dichtend anlegen kann.

**Ansprüche**

1. Zahnärztliches Handstück mit zwei voneinander trennbaren Handstückteilen (1, 4), die Leitungsabschnitte (6a, 6c) einer Fluidleitung (6) enthalten, mit einem zwischen den beiden Leitungsabschnitten (6a, 6c) auswechselbar angeordneten Ventil (7), welches im wesentlichen aus einem flexiblen Schlauchstück (16) und wenigstens einem daran befestigten Rohrstück (15), welche im montierten Zustand die beiden Leitungsabschnitte (6a, 6c) miteinander verbinden, sowie einem durch eine Handhabe (13) betätigbaren Klemmglied (12) gebildet ist, das im Sinne einer Quetschung des Schlauchstückes (16) verstellbar gehaltert ist, und mit einem im einen Handstückteil (1) axial sich erstreckenden Hohlraum (10), der nach der der Trennstelle abgewandten Seite hin unter Bildung einer Anlagefläche in den einen Leitungsabschnitt (6c) übergeht und nach der anderen Seite hin offen ist für den Einsatz eines das Schlauchstück (16) enthaltenden und mittels Dichtelemente (18) dichtend einfügbaren und — im eingefügten Zustand — an der Anlagefläche anliegenden Teils des Ventils (7), dadurch gekennzeichnet, daß das Ventil (7) im Innern eines der beiden Handstückteile (1, 4) angeordnet ist, zu welchem Zweck sich der axiale Hohlraum (10) gänzlich innerhalb dieses Handstückteils (1) erstreckt, und daß das Schlauchstück (16) und das zumindest im Bereich der offenen Seite des Hohlraums am Schlauchstück (16) angeordnete Rohrstück (15) eine Patrone (11) bilden, die nach Trennung der beiden Handstückteile (1, 4) axial in den den Abmessungen der Patrone (11) angepaßten Hohlraum (10) eingesetzt und zum Auswechseln aus diesem wieder herausgezogen werden kann.

2. Handstück nach Anspruch 1, dadurch gekennzeichnet, daß das Schlauchstück (16) an beiden Enden mit einem festen Rohrstück (14, 15) versehen ist, über das eine das Schlauchstück (16) umgebende Hülse (17) greift, die am Umfang eine Ausnehmung (22) zum Eindrücken des Klemmgliedes (12) enthält und die das Schlauchstück (16) durch Klemmwirkung mit den Rohrstutzen (14, 15) verbindet.

3. Handstück nach Anspruch 1 oder 2, dadurch gekennzeichnet, daß die Handhabe (13) an ihrem inneren Umfang eine eine radiale Verstellung des Klemmgliedes (12) ermöglichende Ausnehmung (24) aufweist, die so ausgebildet ist, daß das Klemmglied (12) bei axialer Entnahme der Patrone (11) aus dem Hohlraum (10) bis über die äußere Mantelfläche des Schlauchstückes (16) bzw. der Hülse (17) ausweichen kann.

4. Handstück nach Anspruch 1, dadurch gekennzeichnet, daß zur Abdichtung des Leitungskanals (6b) der Patrone (11) und des benachbarten Leitungsabschnittes (6c) ein im montierten Zustand axial vorgespannter Dichtring (18) und zur axialen Vorspannung eine Spannmutter (19) vorgesehen sind, an der sich ein am Rohrstück (15) der Patrone (11) befindlicher Flansch (20) abstützt.

5. Handstück nach einem der Ansprüche 1 bis 4, dadurch gekennzeichnet, daß als Klemmglied eine Kugel (12) vorgesehen ist, die mittels eines als Exzenter wirkenden Betätigungsringes (13) radial in die Ausnehmung (22) der Hülse (17) eindrückbar ist.

**Claims**

1. A hand-tool for use in dentistry, having two hand-tool parts (1, 4) which can be separated from one another and which contain line sections (6a, 6c) of a fluid line (6) ; a valve (7) exchangeably arranged between the two line sections (6a, 6c) which essentially consists of a flexible hose member (16) and at least one tubular member (16) attached thereto, and which, in the assembled state, connects the two line sections (6a, 6c) to one another ; a clamping member (12) which can be operated by a handle (13) and which is mounted so as to be adjustable in respect of its compressing action on the hose member (16) ; and a hollow space (10) which extends axially in the one hand-tool part (1) and which at the end facing away from the separation point, merges into the first line section (6c) so as to form a bearing surface, and at the other end is open for the insertion of a part of the valve (7) which contains the hose member (16) and can be inserted in sealed manner by means of sealing elements (18) and which, in the inserted state, abuts against the bearing surface, characterised in that the valve (7) is arranged in the interior of one of the two hand-tool parts (1, 4), for which purpose the axial space (10) extends completely within this hand-tool part (1) ; and that the hose member (16) and the tubular member (15) which, at least in the region of the open end of the hollow space, is disposed at the hose member (16), form a cartridge (11) which, after the separation of the two hand-tool parts (1, 4), can be axially inserted into the hollow space (10), which corresponds to the dimensions of the cartridge (11), and can be withdrawn therefrom again, in order to be exchanged.

2. A hand-tool according to Claim 1, characterised in that the hose member (16) is provided at both ends with a fixed tubular member (14, 15), over which there engages a sleeve (17) which surrounds the hose member (16) and which, at its periphery, has a recess (22) into which the clamping member (12) can be pressed and which connects the hose member (16) to the tubular members (14, 15) by a clamping action.

3. A hand-tool according to Claim 1 or Claim 2, characterised in that at its inner periphery, the handle (13) is provided with a recess (24) which facilitates a radial adjustment of the clamping member (12) and which is so designed that when the cartridge (11) is removed from the space (10), the clamping member (12) can pass over the outer surface of the hose member (16) and the sleeve (17).

4. A hand-tool according to Claim 1, characterised in that a sealing ring (18), which in the assembled state is axially biased, is provided for sealing the conducting channel (6b) of the cartridge (11) and of the adjacent line section (6c), an adjusting nut (19), against which abuts a flange (20) arranged on the tubular member (15) of the cartridge (11), being provided for the axial biasing.

5. A hand-tool according to one of Claims 1 to 4, characterised in that the clamping member consists of a sphere (12) which can be radially pressed into the recess (22) of the sleeve (17) by means of an actuating ring (13) which acts as a cam.

**Revendications**

1. Pièce à main de dentisterie comportant deux éléments (1, 4) pouvant être séparés l'un de l'autre et qui contiennent des sections (6a, 6c) d'une conduite hydraulique (6), une valve (7) disposée de manière à pouvoir être remplacée entre les deux sections de conduite (6a, 6c) et qui est formée essentiellement par un élément de tuyau souple (16) et par au moins un élément tubulaire (15), qui y est fixé, l'élément de tuyau et l'élément tubulaire reliant entre elles, à l'état monté, les deux sections de conduite (6a, 6c), ainsi que par un organe de serrage (12) pouvant être actionné au moyen d'une poignée (13) et qui est maintenu en étant déplaçable dans le sens d'un pincement de l'élément de tuyau (16), et comportant une cavité (10) s'étendant axialement dans un élément (1) de la pièce à main et qui se poursuit, vers le côté éloigné de la zone de séparation, par une section de conduite (6a), moyennant la formation d'une surface d'appui, et est ouvert, de l'autre côté, pour l'insertion d'une partie de la valve (7) contenant l'élément du tuyau (16) et pouvant être insérée de façon étanche au moyen d'un organe d'étanchéité (18) et s'appliquant — à l'état inséré — contre la surface d'appui, caractérisée par le fait que la valve (7) est disposée à l'intérieur de l'un des deux éléments (1, 4) de la pièce à main et qu'à cet effet, la cavité axiale (10) s'étend intégralement à l'intérieur de cet élément (1) de la pièce à main et que l'élément de tuyau (16) et l'élément tubulaire (15) disposé au moins au voisinage du côté ouvert de la cavité sur l'élément de tuyau (16) forment une cartouche (11) qui, après séparation des deux éléments (1, 2) de la pièce à main, peut être introduite axialement dans la cavité (10) adaptée aux dimensions de la cartouche (11) et peut être à nouveau retirée hors de cette cavité en vue de son remplacement.

2. Pièce à main suivant la revendication 1, caractérisée par le fait que l'élément du tuyau (16) est muni, aux deux extrémités, d'un élément tubulaire fixe (14, 15) par-dessus lequel s'engage un manchon (17) entourant l'élément de tuyau (16) et qui contient sur son pourtour un évidement (22) servant à enfoncer l'organe de serrage (12) et relie l'élément de tuyau (16) par serrage aux turbulences (14, 15).

3. Pièce à main suivant la revendication 1 ou 2, caractérisée par le fait que la poignée (13) comporte, sur son pourtour, un évidement (24) permettant un déplacement radial de l'organe de serrage (12) et qui est agencé de telle sorte que, lors du prélèvement axial de la cartouche (11) hors de la cavité (10), l'organe de serrage (12) peut se déporter jusqu'au-dessus de la surface enveloppe extérieure de l'élément de tuyau (16) ou du manchon (17).

4. Pièce à main suivant la revendication 1, caractérisée par le fait que pour l'étanchéification du canal (6b) formant conduite de la cartouche (11) et de la section de conduite voisine (6c), il est prévu une bague d'étanchéité (8) précontrainte axialement à l'état monté et que pour réaliser la précontrainte axiale il est prévu un écrou tendeur (19) sur lequel s'appuie une collerette (20) située sur la pièce tubulaire (15) de la cartouche (11).

5. Pièce à main suivant l'une des revendications 1 à 4, caractérisée par le fait qu'il est prévu comme organe de serrage une bille (12) qui peut être repoussée radialement, au moyen d'une bague d'actionnement (13) agissant en tant qu'excentrique, dans l'évidement (22) du manchon (17).

FIG 1

FIG 3

1

FIG 2

FIG 4

FIG 5